# EUROPÄISCHE PATENTSCHRIFT

(11) **EP 0 248 161 B1**
(45) Veröffentlichungstag und Bekanntmachung des Hinweises auf die Patenterteilung: **13.10.1993**
(21) Anmeldenummer: 87104514.2
(22) Anmeldetag: 26.03.1987
(51) Int. Cl.: B29D 31/00, B29K 105/08

(54) **Schalenstruktur aus faserverstärktem Kunststoff**
Fuselage made of fibre-reinforced plastics material
Coque en matière plastique renforcée de fibres

(30) Priorität: 30.04.1986 DE 3614618
(43) Veröffentlichungstag der Anmeldung: 09.12.1987
(73) Patentinhaber: Deutsche Aerospace Airbus Gesellschaft mit beschränkter Haftung, 21129 Hamburg (DE)
(72) Erfinder: Kallies, Günter, D-2000 Hamburg 54 (DE); Scheidemann, Dieter, D-2000 Hamburg 60 (DE)

(56) Entgegenhaltungen:
- EP-A- 0 142 697
- DE-C- 3 003 552
- FR-A- 2 333 644
- US-A- 3 096 958
- US-A- 3 995 081
- US-A- 4 310 132
- US-A- 4 389 367
- TRANSACTIONS OF THE SOCIETY OF NAVAL ARCHITECTS AND MARINE ENGINEERS, Band 73, 1965, 415/449, Seiten 428-430; K.B. SPAULDING, Jr. et al.: "Fiberglass-Reinforced Plastic Minesweepers"

## Beschreibung

Die Erfindung bezieht sich auf eine Schalenstruktur nach dem Oberbegriff des Anspruchs 1.

Eine derartige Struktur ist im Prinzip beispielsweise der DE-PS 30 03 552 zu entnehmen. Dieses Bauteil weist auf der Innenseite der Beplankung ein Versteifungsgitter aus Längs- und Querrippen auf, dabei ist das Gitter aus Kastenrahmen zusammengestzt, die im Wickelverfahren hergestellt sind. Die Struktur wird beim Aushärten durch eine Vorrichtung geformt, wobei die einzelnen Innenräume der Kastenrahmen durch Formteile ausgefüllt sind. Diese Formteile sind mindestens teilweise aus einem geeigneten Metall durch spanende Formung hergestellt.

Hierbei besteht insbesondere der Nachteil, daß die betreffende Vorrichtung recht kostenintensiv ist.

Demgemäß liegt der Erfindung die Aufgabe zugrunde, eine gattungsgemäße Struktur derart auszubilden, daß sie mit einer weniger aufwendigen Vorrichtung herstellbar ist. Eine weitere Aufgabe, die durch die Erfindung gelöst wird, besteht darin, die besagte Struktur gegenüber bekannten Lösungen zu vereinfachen.

Diese Aufgabe ist bei einer gattungsgemäßen Struktur durch die kennzeichnenden Merkmale des Anspruchs 1 gelöst. Vorteilhafte Weiterbildungen der Erfindung sind in den Unteransprüchen angegeben.

Die damit erreichten Vorteile bestehen darin, daß diese Struktur in einer Vorrichtung mit Formteilen herstellbar ist, die weitgehend aus einem gummielastischen Material bestehen und die Struktur aus weniger einzeln vorzubereitenden Laminaten gebildet ist.

Die Erfindung ist anhand der Zeichnung dargestellt und in der Beispielbeschreibung näher erläutert. Es zeigen
- Fig. 1: eine Übersicht über ein Schalenbauteil,
- Fig. 2: den Schnitt II-II nach Fig. 1,
- Fig. 3: die Einzelheit III nach Fig. 2,
- Fig. 4: schematisch den Schichtaufbau im hautnahen Bereich einer spantabstützung,
- Fig. 5: den Schichtaufbau im inneren Bereich einer Spantabstützung,
- Fig. 6: den Schnitt VI-VI nach Fig. 2,
- Fig. 7: den Schnitt VII-VII nach Fig. 1,
- Fig. 8: schematisch den Aufbau der Faserschichten nach Fig. 7,
- Fig. 9: den Schnitt IX-IX nach Fig. 1 und
- Fig.10: schematisch die Schichten nach Fig. 9.

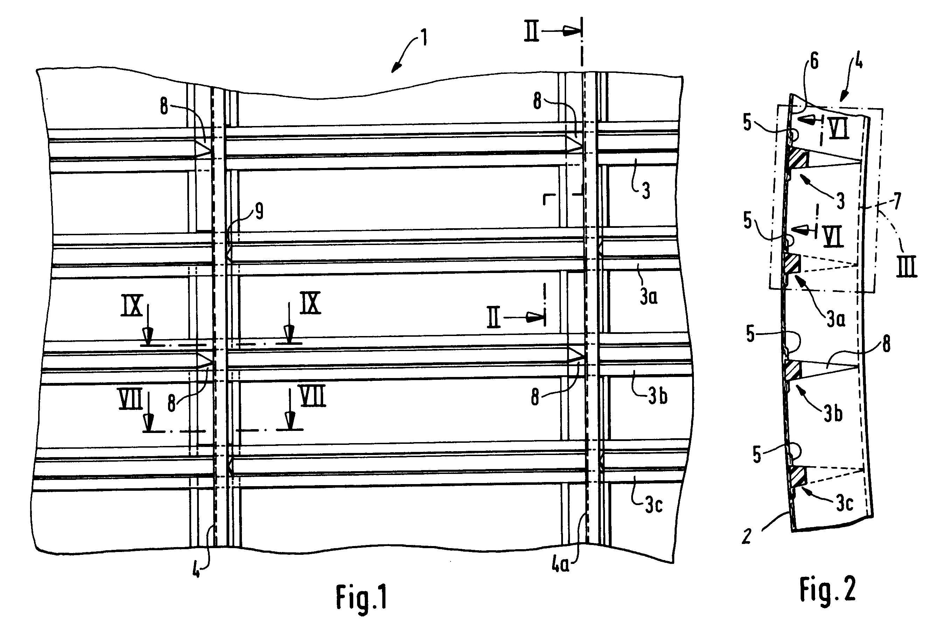

Die Figuren 1 und 2 zeigen eine Übersicht über ein Schalenbauteil 1 mit der Außenhaut 2, den Stringern 3 bis 3c und den Spanten 4 und 4a. Die Stringer 3 bis 3c sind mit ihren Flanschen 5 mit der Außenhaut verklebt. Die Spante 4 und 4a weisen entsprechende Flansche auf, die gleichfalls mit der Haut 2 verklebt sind. In der durch den Schnitt definierten Blickrichtung erscheint die bugseitige Fläche des Steges in der Ansicht. In Umfangsrichtung ist an jedem zweiten Kreuzungspunkt eines Spantes 4 mit einem Stringer 3 eine Spantabstützung 8 vorgesehen. Je ein hier nicht erkennbares Spantsegment erstreckt sich über zwei Stringerabstände bis zur nächsten Spantabstützung 8. Außer den bugseitigen Spantabstützungen 8 weist die Schale heckseitige Spantabstützungen 9 auf, die - wie Fig. 1 zeigt - gegenüber den bugseitigen um einen Stringerabstand versetzt sind.

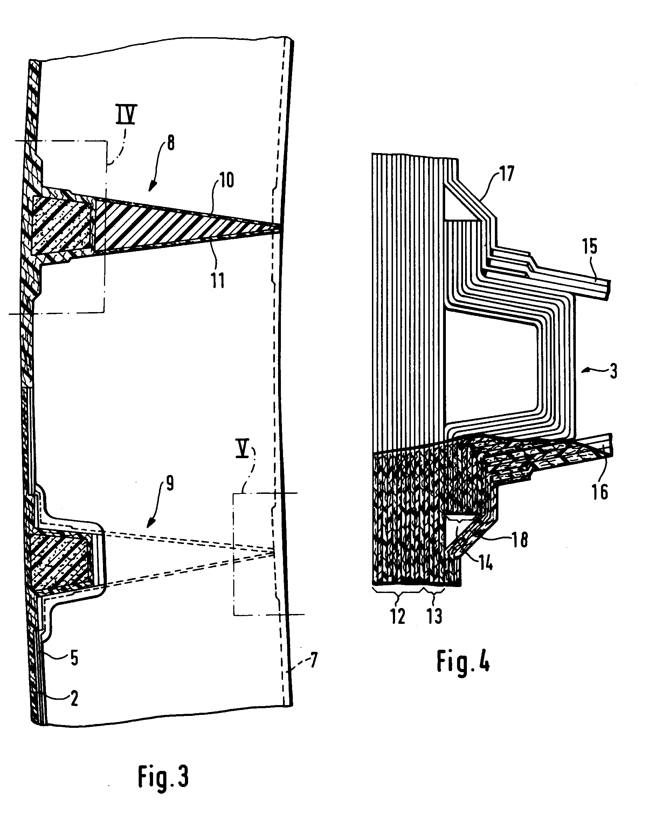

Figur 3 zeigt die Einzelheit III nach Fig. 2. Hier erscheint die obere Spantabstützung im Schnitt. Die untere Spantabstützung 9 ist unsichtbar, da sie sich hinter dem Steg des Spantes 4 befindet. In der oberen Spantabstützung 8 treffen zwei Spantsegmente aufeinander. Jede Spantabstützung 8 bzw. 9 besteht praktisch aus zwei im Prinzip dreieckigen Rippen 10 und 11, wovon jede zu einem anderen Spantsegment gehört.

Figur 4 zeigt schematisch die einzelnen Prepreg-Schichten im hautnahen Bereich einer Spantabstützung 8 mit den Schichten 12 der Außenhaut 2, den Schichten 13 des Spantgurtes, den Schichten 14 des Stringers 3, den Schichten 15 eines oberen und den Schichten 16 eines unteren Segmentes, die zusammen eine Spantabstützung 8 bilden.

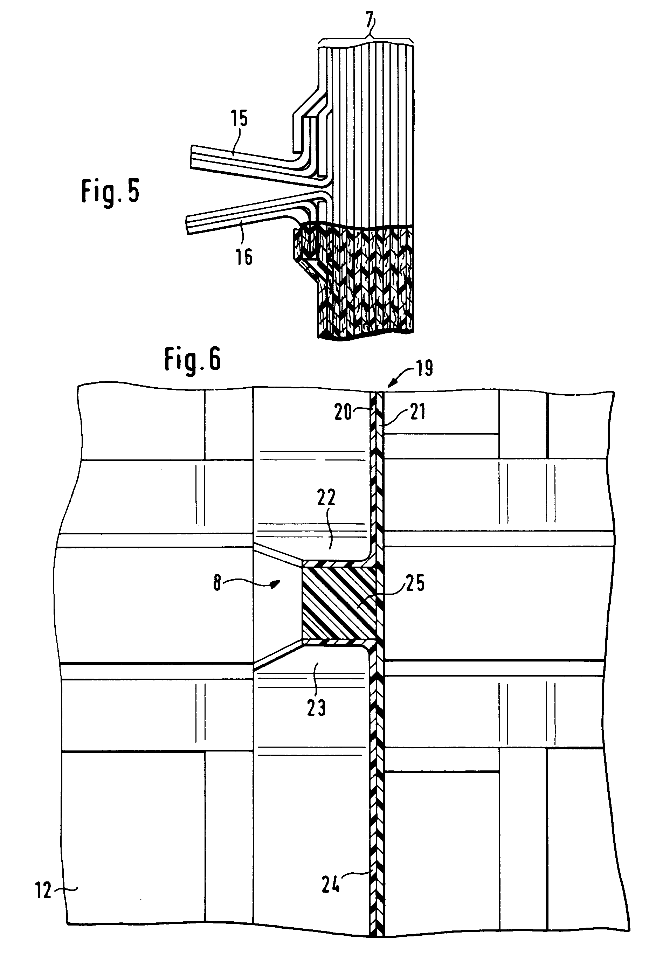

Figur 5 zeigt eine entsprechende Darstellung des hautfernen Bereiches einer Spantabstützung 8 mit den betreffenden Faserschichten.

Figur 6 zeigt den Schnitt VI-VI nach Fig.2. Der Steg 19 des Spantes 4 besteht aus einem bugseitigen Spantsegment 20 und einem heckseitigen Spantsegment 21. Die Spantabstützung 8 besteht aus den beiden im Prinzip dreieckigen Rippen 22 und 23. Jede der Rippen 22,23 bildet das Ende eines anderen Spantsegmentes 20,24. Der pyramidenförmige Hohlraum zwischen den den beiden Rippen 22,23 ist durch einen Hartschaum-Körper 25 ausgefüllt.

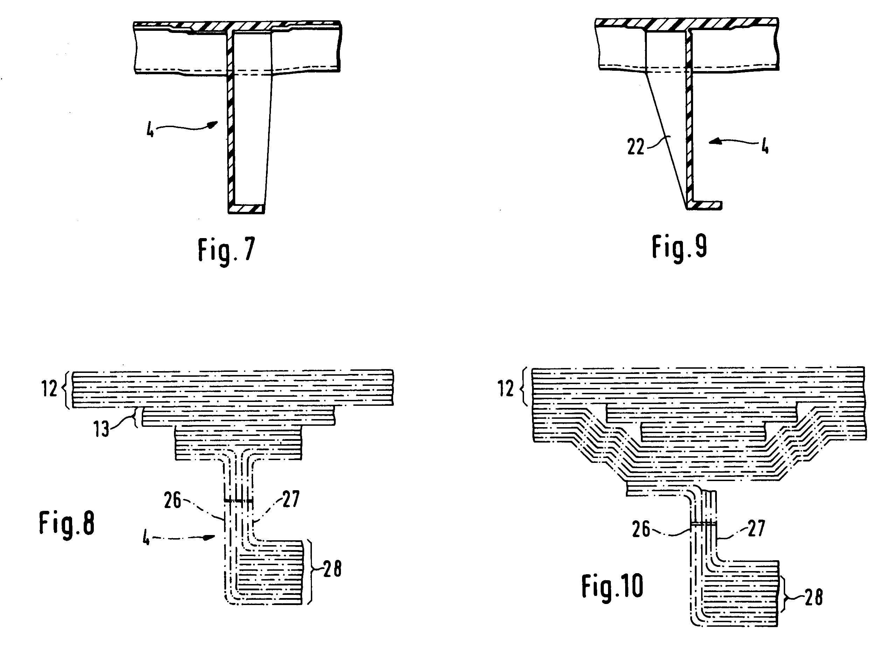

Figur 7 zeigt den Schnitt VII-VII nach Fig. 1 mit dem im Prinzip I-förmigen Querschnitt des Spantes 4. Hier ist eine heckseitige Spantabstützung mit trapezförmigen Rippen gezeigt.

Figur 8 zeigt die einzelnen Faserschichten der Außenhaut und des Spantes 4. Die hautnahen Gurtschichten des Spantes 4 sind einstückig über alle Spantsegmente der Schale geführt. Der Steg des Spantes 4 wird durch die Schichten eines bugseitigen Spantsegmentes 26 und eines heckseitigen Spantsegmentes 27 gebildet. Die Schichten des inneren Gurtes 28 sind ebenfalls einstückig über alle Spantsegmente geführt.

Die Figur 9 zeigt den Schnitt IX-IX nach Fig. 1. Da der innere Spantgurt nicht mittig über dem Steg sondern seitlich davon angeordnet ist, zeigt dieser Schnitt einer bugseitigen Spantabstützung wieder eine dreieckige Rippe 22.

Figur 10 zeigt die Anordnung der einezelnen Faserschichten im Bereich, wie in Fig. 9 gezeigt.

## Patentansprüche

1. Schalenstruktur, insbesondere für ein Flugzeug, aus faserverstärktem Kunststoff, bestehend aus einer vorzugsweise zylindrischen Außenhaut (2) mit längslaufenden Stringern (3) von hutförmigem Querschnitt und in Umfangsrichtung verlaufenden im Prinzip I-förmigen Spanten (4) mit einem hautseitigen und einem inneren Gurt und einem dazwischenliegenden Steg, wobei der Steg eine bugseitige und eine heckseitige Außenfläche aufweist, und ein Spant aus bogenförmigen Spantsegmenten gebildet ist, dadurch **gekennzeichnet,** daß ein Spant (4,4a) jeweils aus einer Anzahl die bugseitige Fläche des Steges bildender Segmente erster Art und einer Anzahl die heckseitige Fläche des Steges bildender Segmente zweiter Art besteht, die gegenüber den Segmenten erster Art in Umfangsrichtung um einen Stringerabstand versetzt sind, wobei das Fasermaterial eines jeden Spantsegmentes in eine Spantabstützung (8,9) ausläuft.

2. Struktur nach Anspruch 1, dadurch **gekennzeichnet,** daß die Spantabstützungen (8,9) im Prinzip pyramidenförmig ausgebildet sind.

3. Struktur nach Anspruch 1 oder 2, dadurch **gekennzeichnet,** daß die Spantabstützungen (8,9) einen aus Hartschaum bestehenden Kern (25) aufweisen.

4. Struktur nach einem der Ansprüche 1 bis 3, dadurch **gekennzeichnet,** daß die Hohlräume der Stringer durch Hartschaum ausgefüllt sind.

## Claims

1. Shell structure, in particular for an aircraft, consisting of fibre reinforced synthetic material comprising a preferably cylindrical outer skin (2) having longitudinally running stringers (3) of hat shaped cross-section and essentially I-shaped struts (4) running in the peripheral direction and having a skin-side flange and an inner flange with a web therebetween, wherein the web has a nose-end and a tail-end outer surface and a strut is formed from curved strut segments, characterised in that, a strut (4, 4a) always consists of a number of segments of a first type forming the nose-end faces of the strut and a number of segments of a second type forming the tail-end faces of the strut which, relative to the segments of a first type, are displaced in the peripheral direction by one stringer spacing, wherein the fibre material of each one of the strut segments ends in a strut support (8, 9).

2. Structure in accordance with Claim 1, characterised in that, the strut supports (8, 9) are essentially pyramidical in shape.

3. Structure in accordance with Claim 1 or 2, characterised in that, the strut supports (8, 9) have a core (25) consisting of solid foam.

4. Structure in accordance with any of Claims 1 to 3, characterised in that, the hollow spaces of the stringers are filled with solid foam.

## Revendications

1. Structure en coquille notamment pour avion en matière synthétique renforcée par des fibres, constituée d'un revêtement extérieur (2) de préférence cylindrique de raidisseurs (3) longitudinaux à section en forme de chapeau et de couples (4) en principe en forme I, dirigés dans la direction périphérique, avec une ceinture située du côté du revêtement et une ceinture intérieure ainsi qu'une entretoise intermédiaire, l'entretoise ayant une surface extérieure du côté avant et une surface extérieure du côté arrière et chaque couple étant formé de segments de couple en forme d'arc, structure caractérisée en ce que chaque couple (4, 4a) se compose de plusieurs segments d'un premier type formant la surface avant de l'entretoise et de plusieurs segments d'un second type formant la surface arrière de l'entretoise et décalés d'un intervalle de raidisseur dans la direction périphérique par rapport aux segments du premier type, le matériau à base de fibres d'un segment de couple se terminant au niveau d'un appui de couple (8, 9).

2. Structure selon la revendication 1, caractérisée en ce que les appuis de couple (8, 9) ont en principe une forme pyramidale.

3. Structure selon la revendication 1 ou 2, caractérisée en ce que les appuis de couple (8, 9) ont un noyau (25) en mousse dure.

4. Structure selon l'une des revendications 1 à 3, caractérisée en ce que les cavités des raidisseurs sont remplies de mousse dure.
